# EUROPEAN PATENT SPECIFICATION

(11) **EP 2 684 376 B1**
(45) Date of publication and mention of the grant of the patent: **25.05.2016**
(21) Application number: 12707345.0
(22) Date of filing: 08.03.2012
(51) Int. Cl.: H04N 21/418, H04N 21/436

(54) **A SYSTEM FOR ENHANCED COMMUNICATION BETWEEN A HOST DEVICE AND A CONDITIONAL ACCESS MODULE**
SYSTEM ZUR ERWEITERTEN KOMMUNIKATION ZWISCHEN EINER HOST-VORRICHTUNG UND EINEM BEDINGTEN ZUGANGSMODUL
SYSTÈME POUR AMÉLIORER LA COMMUNICATION ENTRE UN DISPOSITIF HÔTE ET UN MODULE D'ACCÈS CONDITIONNEL

(30) Priority: 09.03.2011 US 201161450634 P
(43) Date of publication of application: 15.01.2014
(73) Proprietor: SmarDTV S.A., 1033 Cheseaux-sur-Lausanne (CH)
(72) Inventor: PHILIP, Serge, F-13704 La Ciotat (FR); MOLAC, Laurent, F-13704 La Ciotat (FR)
(74) Representative: Leman Consulting S.A.
(86) International application number: PCT/EP2012/053962
(87) International publication number: WO 2012/120068

(56) References cited:
- EP-A2- 0 923 245

## Description

### INTRODUCTION

The present invention relates to the domain of conditional access and more particularly to aspects regarding the transfer of information between a host device and an access control device via an interface complying with a Common Interface Standard.

### STATE OF THE ART

Apparatus exists for viewing multimedia content, more specifically audio/video content. Such apparatus may exist in the form of a broadcast receiver and a video display connected to a set top box with a decoder or in the form of an IP TV set adapted to receive broadcasts via internet for example, comprising a display and a decoder. The decoder may comprise means to decrypt a broadcast or transmitted service should it be broadcast or transmitted in encrypted form. In the case where viewing of the content is subject to the perception of a fee by a service provider or content owner it is usual for the apparatus to comprise a security module, which is usually portable and detachable from the apparatus. The security module holds keys necessary to decrypt the content and rights proving that the user of the apparatus has procured the necessary viewing rights from the provider/content owner.

There exists a specification known as the Common Interface Specification which standardises the way in which a conditional access module or CAM communicates with a host device. More specifically, within the Pay-TV industry, this common interface is known as DVB-CI. In general the host device comprises the means for receiving a broadcast or transmission and the CAM comprises cryptographic means and usually is associated with a security module which holds the security information such as rights and cryptographic keys. The security module is generally portable and removable from the CAM. A CAM which is configured to communicate according to the Common Interface Specification is known as a Common Interface Conditional Access Module or CICAM.

Common Interface Plus or CI+ is a specification which extends the Common Interface Specification and it has been widely accepted by many consumer electronics manufacturers and Pay-TV technology companies. The CI+ specification is a technical specification that adds additional security and features to the proven DVB-CI Standard that will allow CI+ compatible consumer electronic devices, such as Integrated Digital Televisions and Set Top Boxes, access to a wide range of Pay TV Services via plug-in CI+ Modules wherever the CI+ Technology is supported by the local Pay TV Provider.

In any of the Common Interface Specifications such as DVB-CI or CI+ (version 1.2 or version 1.3), the CICAM and the host may communicate with each other via two communication channel, namely a transport stream interface and a command interface. The former is a bidirectional channel for transport packets (e.g. MPEG-2 transport packets including audio, video, service information tables (SI), programme specific information tables (PSI), private tables). The latter, being for protocol related data, carries communications between applications running on the host and on the CICAM and is also bidirectional.

Currently, according to the Common Interface Specifications in use, the data rate for the Command Interface is 3.5 Megabits/sec (DVB-CI or CI+). This data rate is sufficient to handle applications adapted to run on a CICAM using command messages of an ADPU format (Application Packet Data Unit).

With the evolution of the CI+ Standard to cover new features such as IP compatibility, wherein a CICAM is connected to an IP server for IP streaming for example, there comes a drawback with the limited data rate of the command interface. Eventually the Specification may have to evolve to take care of newer data rate requirements for the command interface to be able to handle the higher bandwidth to deal with higher performance applications needed by these newer services. In the meantime there is still a need to be able to handle these higher performance applications within the constraints of the Common Interface Specifications of today.

European Patent Application Publication number 2,026,558 describes a transcoder module for converting audio/video content from one format to another. The transcoder module is connected to a digital television receiver/decoder via a PCMCIA interface operating according to a DVB-CI standard. The interface comprises a transport stream interface and a command interface. The document highlights a problem whereby the command interface is too slow to allow a rich OSD (On-Screen-Display) to be manipulated on the host device. A solution is offered whereby instead of using the command interface to send commands to manipulate the OSD on the receiver/decoder (host), an application is run on the transcoder to generate the rich OSD and to convert it into data packets which are then multiplexed onto the transport stream along with the content and sent to the receiver/decoder via the transport stream interface. This solution is fine for generating a rich OSD as it allows for a simole application to be run on the transcoder to generate the OSD, however it does not allow for more complex situations to be dealt with, whereby more complex applications are run across the entire system including the two modules (transcoder and receiver/decoder).

European Patent Application Publication number 0,923,245 discloses a host device connected, via an interface, to a conditional access module for accessing pay-TV content and discusses problems related to providing for rich applications to be run using the interface. The interface comprises a transport stream interface for audio/video content and a command interface. The solution provided in this document is to use the transport stream interface for transferring application data, instead of the slower command interface, at times when the transport stream interface is not being used for audio/video content. The document further provides teaching as to how to prevent concurrent use of the transport stream interface for audio/video content and application data, thereby circumventing the problem raised by using the transport interface to carry application data.

### BRIEF SUMMARY OF THE INVENTION

It is a goal of the present invention to address the deficiencies in the prior art as mentioned above. In a system comprising a host device and a CICAM, communicating with each other across an interface comprising a transport stream interface and a command interface and complying with a standard interface specification, there is provided a means to allow commands to be communicated between the CICAM and the host device at a data rate which is higher than the specification of the command interface would allow.

This is achieved by adding an enhanced transport stream interface module. The enhanced transport stream interface module can receive commands and communicate the commands via the transport stream interface, thereby greatly increasing the bandwidth capability for command messages between the host and the CICAM.

The solution allows for commands or applications to be run across the host device and the CICAM, with commands or applications requiring bandwidth higher than that offered by that of a standard command interface according to a standard common interface specification such as the DVB-CI standard for example. By across the host device and the CICAM it is meant that commands or applications can be sent from one to the other in either direction, irrespective of whether such commands or applications require the mentioned higher bandwidth or not. According to some embodiments a combination of commands being sent via the command interface and by the method made available by the invention is possible. This allows for more complex commands or applications to be executed than simple commands running on either one or other of the host or CICAM alone.

According to a first aspect of the present invention, there is provided a system comprising a processing module and a host device, the processing module and the host device being adapted to be connected to each other via a communication interface the communication interface comprising:
a command interface configured to transfer at least one command message between the processing module and the host device at a first data-rate, the command message having a command message format; and
a transport stream interface configured to transfer at least one transport stream message between the processing module and the host device at a second data-rate higher than the first data-rate, the transport stream message having a transport stream format different from the command message format;
the processing module being configured:
to convert at least one command message to the transport stream format; and
to send the command message from the processing module to the host device via the transport stream interface; and
the host device being configured:
to convert at least one further command message to the transport stream format; and
to send the further command message from the host device to the processing module via the transport stream interface;
the system characterised in that:
the host device is further configured:
   to include the thus-converted command message along with the transport stream message to form a first enhanced transport stream; and
the processing module is further configured:
   to filter the first enhanced transport stream to separate the further command message from the transport stream message.

According to a second aspect of the present invention, there is provided a host device configured to operate in the system described above, the processing module of said system being further configured to include the thus-converted command message along with the transport stream message to form a first enhanced transport stream and the host device being further configured to filter the first enhanced transport stream to separate the further command message from the transport stream message, the host device comprising a command interface module to receive or to send at least one command at a first data-rate over a command interface and an enhanced transport stream interface module to receive or send at least one transport stream comprising a plurality of data packets over a transport stream interface at a second data-rate higher than the first data rate, the host device characterised in that the enhanced transport stream interface module is further configured to:
convert at least one first command having a command format to at least one first command data packet compatible with a transport stream format, multiplex the first command data packet with at least one first content data packet compatible with the transport stream format to form a first transport stream having the transport stream format;
send the first transport stream over the transport stream interface; and
receive a second transport stream via the transport stream interface;
separate the second transport stream into at least one second content data packet and at least one second data stream command data packet, both compatible with the transport stream format; and
convert the second command data packet into a second command compatible with the command format.

According to a third aspect of the present invention, there is provided a processing module configured to operate in the system described above, the system being further configured to allow the command interface to be used in parallel with the transport stream interface for transferring the command message between the processing module and the host device, the processing module comprising a command interface module to receive or to send at least one standard command at a first data-rate over a command interface, and a transport stream interface module to receive or send at least one transport stream comprising a plurality of data packets over a transport stream interface at a second data-rate higher than the first data rate, the processing module characterised in that the transport stream interface module is further configured to:
convert at least one first command having a command format to at least one first command data packet compatible with a transport stream format, multiplex the first command data packet with at least one first content data packet compatible with the transport stream format to form a first transport stream having the transport stream format;
send the first transport stream over the transport stream interface;
receive a second transport stream via the transport stream interface;
separate the second transport stream into at least one second content data packet and at least one second data stream command data packet, both compatible with the transport stream format; and
convert the second command data packet into a second command compatible with the command format.

According to a fourth aspect of the present invention, there is provided method for transferring a command between the host device described above and the processing module described above, the method comprising:
converting a command to at least one command data packet compatible with a transport stream format, the command having a command format adapted for transfer across a command interface at a first data-rate;
multiplexing the command data packet with a content data packet to give a transport stream adapted for transfer via a transport stream interface at a second data-rate higher than the first data rate;
transferring the transport stream via the transport stream interface;
receiving the transport stream;
extracting the command data packets from the received transport stream;
re-converting the extracted command data packets to recover the command;
executing the recovered command.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1, representing a CICAM and a host, adapted to communicate with each other according to the method known in the state of the art.
Fig. 2, showing a schematic of a CICAM and a host modified to be able to communicate with each other according to an embodiment of the present invention.

### DETAILED DESCRIPTION

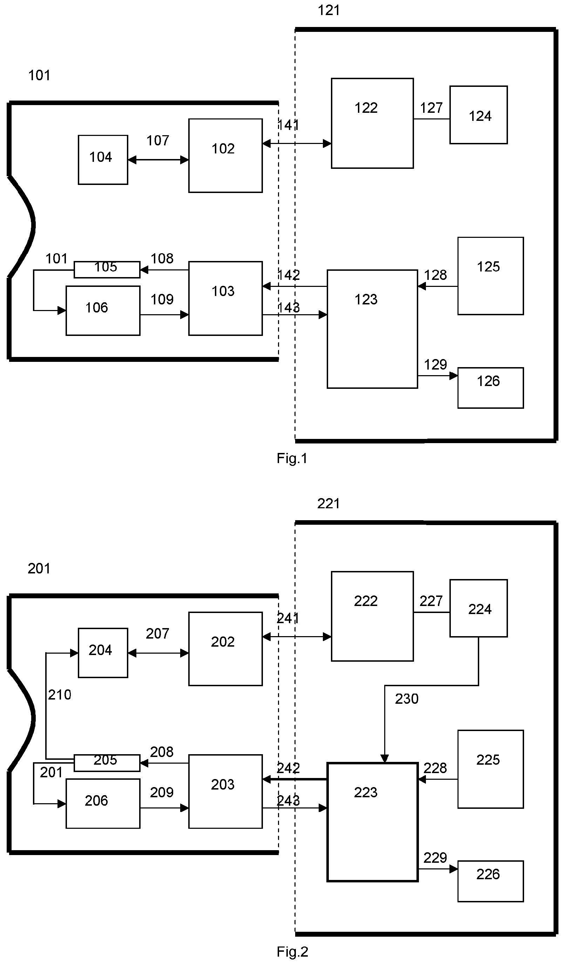

Fig. 1 shows a CICAM (101) and a host (121) connected to each other to be able to communicate between each other according to a common interface standard. The CICAM (101) comprises a command interface module (102) and a transport stream interface module (103). The host (121) comprises a command interface module (122) and a transport stream interface module (123). The host (121) and the CICAM (101) communicate with each other via a common interface comprising a command interface (141) and a transport stream interface (142, 143). An example of such a common interface is a PCMCIA interface adapted to operate according to a DVB-CI standard.

The transport stream interface (142, 143) is adapted to be able to operate at a transport stream data rate. Since this interface carries transport stream information, usually according to an MPEG-2 standard for example, this transport stream data rate is 72 Megabits/second or 96 Megabits per second for example. The command interface (141) is adapted to operate at a first command data rate. According to one example, the generally known Common Interface Standard, the first command data rate is 3.5 Megabits/second.

In operation, the host receives a broadcast or a transmission via a receiver (125), extracts audio/video content and sends the audio/video content to the CICAM (101) via the transport stream interface (142). After processing the received (103) transport stream (108) (for example, filtering), the CICAM (101) may perform cryptographic functions such as scrambling, descrambling, encrypting or decrypting (106) on the processed transport stream (110) and sends the cryptographically transformed transport stream (109) back to the host (121) via the transport stream interface (143). The received cryptographically transformed transport stream (129) can then be processed by the host, for example de-multiplexing (126), for eventual display on a video display (not shown). In keeping with the Common Interface Specification, the host (121) and the CICAM (101) may also exchange commands, protocols or applications across the command interface (141) in either direction. Commands, protocols or applications can be sent (127) via the host's (121) command interface module (122) across the command interface (141) to be received by the CICAM's (101) command interface module (102) to be either executed in the CICAM (101) or stored in the CICAM's (101) command stack (104) for later execution. The host (121) also has a command stack (124) from where commands may be fetched (127). Conversely, the CICAM (101) may fetch (107) commands from its stack (104) send them to the host (121) via the command interface (141) for the host (121) to either execute or store in its stack (124) for later execution. It is worth noting that it is usual for the host to have a command stack, however in the state of the art the CICAM would not necessarily have to have a command stack. According to embodiments of the present invention however it is preferable for both the CICAM and the host to each have a command stack.

Fig. 2 shows a schematic diagram of a system (200) in which an embodiment of the present invention may be deployed. The present invention is intended to support new functionality such as IP streaming, which is reflected in the fact that the receiver (225) in this case may be a NIM tuner (Network Interfaced Module) for example. In this system the host (221) comprises an enhanced transport stream interface module (223) to receive the audio/video content (228) from the receiver. This enhanced transport stream interface module (223) is further capable of transmitting a transport stream via the transport stream interface (242) as in the system of Fig. 1, however it is yet further capable of taking commands (230) from the command stack (224) and sending them to the CICAM (201) via the transport stream interface (242) i.e. in parallel with commands which are sent from the host (221) to the CICAM (201) via the command interface (241). This gives an effective second command data rate which is substantially superior to the first command data rate of Fig. 1. According to the embodiment of the invention, second command data rates of up to 220 Megabits/second are achievable in this manner.

According to the embodiment mentioned, the enhanced transport stream interface module (223) is configured to allow the host to include command and protocol messages (or applications) into the transport stream to give an enhanced transport stream (242). As is generally known, a transport stream comprises data packets with headers and payloads. The enhanced transport stream interface module is therefore configured to format the commands into data packets and to include therein some information allowing them to be distinguished from standard data packets representing media content. The enhanced transport stream interface module (223) adds a predetermined identifier to each message which has been included over and above the regular transport stream information (media content) in order for the CICAM (201) to be able to identify them as commands, applications or protocol messages, thereby allowing for them to be filtered out. As mentioned above, the enhanced transport stream interface module (223) has access (230) to the host's (221) command stack (224) so that it may handle messages requiring to be transmitted to the CICAM (201) at a data rate higher than the standard command interface data rate (3.5 Megabits/second). The transport stream interface (242) is the same as a standard transport stream interface as defined in the DVB-CI Specification for example. According to an embodiment of the present invention, it is used to transfer both transport stream information (228) received from the receiver (NIM tuner) (225) and command messages from the host's command stack (224) from the host (221) to the CICAM (201).

On the CICAM side, according to the embodiment of the invention, the enhanced transport stream (208) received by the transport stream interface module (203) is sent to the filter (205), where the command messages are separated from the transport stream packets, thanks to the identifier mentioned above, and the transport stream packets are sent to the cryptographic module (206) while the command messages are either executed or sent (210) to the command stack (204) for later execution.

As mentioned above, the original command interface may still be used in parallel with the transport stream interface for transferring commands messages, either from the host to the CICAM or vice versa.

According to another embodiment of the present invention (not shown), it is further possible for the CICAM to be modified to be able to add commands to be transferred from the CICAM to the host in the same way as described above for the case where the host adds commands to be transferred from the host to the CICAM, i.e. by including such commands in an enhanced transport stream, especially for commands requiring higher bandwidth than would be possible using the command interface. In this case, the enhanced transport stream interface module (223) is capable of receiving or transmitting information via the transport stream interface (242, 243), such information comprising transport stream packets and/or command messages. When receiving a transport stream comprising commands, the enhanced transport stream interface module is able to identify the commands thanks to an identifier in the header of the packets comprising commands, placed there by the CICAM, and to direct the commands to the host's command stack (or execute the command directly). Similarly, the enhanced transport stream interface module is adapted to identify content packets and redirect them to the de-multiplexer in the host device in the normal manner. The CICAM may take the command from the CICAM's command stack and format it so that it can be included as one or more data packets in the transport stream to be sent to the host..

This embodiment includes all of the features mentioned for the preceding embodiments, namely: the inclusion of an enhanced transport stream interface module in the host device, configured to format commands received into data packets and to include them in a transport stream comprising content data packets for transfer to the CICAM via the transport stream interface; the inclusion of an interface between the command stack in the host and the enhanced transport stream interface module in the host to allow for commands received via the command interface to be formatted into packets by the enhanced transport stream interface module for inclusion into the transport stream to be sent to the CICAM; the inclusion of a command stack in the CICAM; the inclusion of a filter in the CICAM, configured to detect and divert commands within the received transport stream and to send such commands to the CICAM's command stack and to detect content packets within the received transport stream and to send such content for whatever processing may be required before sending the processed content back to the host via the transport stream interface. A system comprising this embodiment of the present invention will thus be configured to execute complex applications between both the host and the CICAM across their mutual interface (including the transport stream interface and the command interface) by allowing complex commands (i.e. commands requiring a higher transfer bandwidth than that which is allowable using the standard command interface) to be sent from the CICAM to the host and from the host to the CICAM for execution therein.

Embodiments of the present invention allow for rich applications to be run in a system comprising a processing module such as a CICAM (Common Interface-compliant Conditional Access Module) and a host device such as a digital television receiver/decoder connected to each other via a communication channel comprising a command interface and a transport stream interface, the command interface adapted to operate at a substantially lower data-rate than the transport stream interface. For example, in a standard DVB-CI or CI Plus communication channel the command interface operates at 3.5 Megabits/second while the transport stream interface operates at up to 220 Megabits/second. By rich applications it is meant applications that necessitate the transfer of large amounts of data from the processing module to the host device and vice versa. By large amounts of data it is meant that in order for the application to function correctly the amount of data is too much to be transferred at the data-rate at which the command interface operates.

Examples of such rich applications include adding the capability of IP (Internet Protocol) communication between the CICAM and the host. Without the invention, if the CICAM needs to open a session with the host it has to do so on a specific resource known as "low speed communication" to establish a connection between a socket on the CICAM and a TCP/IP stack on the host. The host then has to send all IP datagrams (a standard unit of information in Internet Protocol) corresponding to the socket to the CICAM across the command interface using APDU format (application protocol data unit - standard communication unit used in smartcards). The CICAM can respond by return of one or more ADPU messages across the command interface, which is the normal way in any client/server application. The drawback however is that depending on which type of application is being executed, the amount of connections or the amount of time required to process the commands would require a communication bandwidth which is higher than that available using the command interface in order for the application to function correctly. Using a system in which an embodiment of the present invention is deployed, the transfer of all ADPUs related to one or more sockets may be done by including the commands as separately identifiable packets within the transport stream and to transfer the transport stream across the transport stream interface thus taking advantage of its higher bandwidth. In this manner all packets comprising the ADPUs are multiplexed along with the packets comprising media content packets in the MPEG2 transport stream.

Another example of such a rich application is an application which requires the CICAM and the host to share a same file system. In systems comprising a host and a CICAM it is known that the host may be configured to receive content, such as IP content, and to store such content in its file system. The present invention finds use when both the host and the CICAM are required to access that same file system. The CICAM may need to read and decrypt some files related to a media application, for example pictures or private movies. Furthermore, the CICAM may be required to erase files or to write or otherwise add new files to the file system (on the host). These files could be very large. Without the invention it would be necessary to do this through ADPUs transferred via the command interface, which could render some of these jobs impossible due to the low data-rate of the command interface. Using a system in which an embodiment of the present invention is deployed, files can be easily transferred between the host and the CICAM in either direction using the transport stream interface instead of the command interface. Since the files are formatted as data packets, files of a large size and of any file type or file format can be read/written/erased using this technique.

Another application which may be regarded as a rich application in this context, which is rendered possible by the present invention is the synchronising of large files between the host and the CICAM. As previously mentioned, according to the embodiment of the invention, both the CICAM and the host may comprise a command stack. Indeed, in more general terms, it can be said that both the host and the CICAM may comprise storage means, the storage means being configured as a command stack where commands are stored and a file system where data files are stored. Typically such data files could comprise media content documents for example (media files). Since either of the host or the CICAM is able to alter any of the data files, it is sometimes required to be able to synchronise the files between the host and the CICAM in order to maintain up-to-date accuracy across the system. For example, the CAM could request to see files A and B, a picture file and a movie file for example. To do this the CAM sends a request to the host over the command interface for the two files, the host replies over the command interface that file A will be sent over the transport stream in packets having a header 1 and file B will be sent over the transport stream in packets having a header 2. The host, in this case being configured to add or modify headers as required thanks to the enhanced transport stream interface module, adds the mentioned headers accordingly and sends the packets comprising the files over the transport stream interface. The CAM then filters on header 1 and header 2, ignoring other data such as content data, or further filtering on header 4 for example, which could be ECM data useful for processing the files according to predetermined conditions of access to the files.

The invention is not limited to an IP (internet protocol) set-up as indicated above, but is suitable for use in any system requiring large bandwidth and high data rate inter-transfer of commands or applications between a host and a CICAM.

## Claims

1. A system comprising a processing module (101, 201) and a host device (121, 221), the processing module (101, 201) and the host device (121, 221) being adapted to be connected to each other via a communication interface (141, 142, 143; 241, 242, 243);
the communication interface (141, 142, 143; 241, 242, 243) comprising:
a command interface (141, 241) configured to transfer at least one command message between the processing module (101, 201) and the host device (121, 221) at a first data-rate, the command message having a command message format; and
a transport stream interface (142, 143; 242, 243) configured to transfer at least one transport stream message between the processing module (101, 201) and the host device (121, 221) at a second data-rate higher than the first data-rate, the transport stream message having a transport stream format different from the command message format;
the processing module (201) being configured:
to convert at least one command message to the transport stream format; and
to send the command message from the processing module (201) to the host device (221) via the transport stream interface (243); and
the host device (221) being configured:
to convert at least one further command message to the transport stream format; and
to send the further command message from the host device (221) to the processing module (201) via the transport stream interface (242);
the system **characterised in that**:
the host device (221) is further configured:
to include the thus-converted command message along with the transport stream message to form a first enhanced transport stream; and
the processing module (201) is further configured:
to filter the first enhanced transport stream to separate the further command message from the transport stream message.

2. The system according to claim 1, wherein:
the processing module (201) is further configured:
to include the thus-converted command message along with the transport stream message to form a first enhanced transport stream; and
the host device (221) is further configured:
to filter the first enhanced transport stream to separate the further command message from the transport stream message.

3. The system according to any of the preceding claims, further configured to allow the command interface (241) to be used in parallel with the transport stream interface (242, 243) for transferring the command message between the processing module (201) and the host device (221).

4. The system according to any of the preceding claims, wherein the communication interface is compliant with any from a CI Plus Standard, a DVB-CI Standard or a CI Standard.

5. The system according to any of the preceding claims, wherein the second data-rate is more than ten times greater than the first data-rate.

6. A host device (121, 221) configured to operate in a system according to claim 2, the host device (121, 221) comprising a command interface module (122, 222) to receive or to send at least one standard command at a first data-rate over a command interface (141, 241) and an enhanced transport stream interface module (123, 223) to receive or send at least one transport stream comprising a plurality of data packets over a transport stream interface (142, 143; 242, 243) at a second data-rate higher than the first data rate, the host device (221) **characterised in that** the enhanced transport stream interface module (223) is further configured to:
convert at least one first command having a command format to at least one first command data packet compatible with a transport stream format, multiplex the first command data packet with at least one first content data packet compatible with the transport stream format to form a first transport stream having the transport stream format;
send the first transport stream over the transport stream interface (241);
receive a second transport stream via the transport stream interface;
separate the second transport stream into at least one second content data packet and at least one second data stream command data packet, both compatible with the transport stream format; and
convert the second command data packet into a second command compatible with the command format.

7. The host device (221) according to claim 6, wherein it further comprises a command stack to store at least one of the commands.

8. The host device (221) according to either of claims 6 or 7, wherein it further comprises a file system to store at least one first file based on the first content data packets or to store at least one second file from where the second content data packets may be derived

9. The host device (221) according to any of claims 6 to 8, wherein the second data-rate is more than ten times greater than the first data-rate.

10. A processing module (101, 201) configured to operate in a system according to claim 3, the processing module (101, 201) comprising a command interface module (102, 202) to receive or to send at least one standard command at a first data-rate over a command interface (141, 241), and a transport stream interface module (103, 203) to receive or send at least one transport stream comprising a plurality of data packets over a transport stream interface (142, 143; 242, 243) at a second data-rate higher than the first data rate, **the processing module (201) characterised in that** the transport stream interface module (102, 202) is further configured to:
convert at least one first command having a command format to at least one first command data packet compatible with a transport stream format, multiplex the first command data packet with at least one first content data packet compatible with the transport stream format to form a first transport stream having the transport stream format;
send the first transport stream over the transport stream interface (241);
receive a second transport stream via the transport stream interface;
separate the second transport stream into at least one second content data packet and at least one second data stream command data packet, both compatible with the transport stream format; and
convert the second command data packet into a second command compatible with the command format.

11. The processing module (201) according to claim 10, wherein it further comprises a command stack to store at least one of the commands.

12. The processing module (201) according to either of claims 10 or 11, wherein it further comprises a file system to store at least one first file based on the first content data packets or to store at least one second file from where the second content data packets may be derived

13. The processing module (201) according to any of claims 10 to 12, wherein the second data-rate is more than ten times greater than the first data-rate.

14. A method for transferring a command between a host device (221) according to any of claims 6 to 9 and a processing module (201) according to any of claims 10 to 13, the method comprising:
converting a command to at least one command data packet compatible with a transport stream format, the command having a command format adapted for transfer across a command interface at a first data-rate;
multiplexing the command data packet with a content data packet to give a transport stream adapted for transfer via a transport stream interface at a second data-rate higher than the first data rate;
transferring the transport stream via the transport stream interface;
receiving the transport stream;
extracting the command data packets from the received transport stream;
re-converting the extracted command data packets to recover the command;
executing the recovered command.

15. The method according to claim 14, wherein the second data-rate is more than ten times greater than the first data-rate.

## Patentansprüche

1. System mit einem Verarbeitungsmodul (101, 201) und einem Host-Gerät (121, 221), wobei das Verarbeitungsmodul (101, 201) und das Host-Gerät (121, 221) geeignet sind, miteinander über eine Verbindungsschnittstelle (141, 142, 143; 241, 242, 243) verbunden zu werden;
wobei die Verbindungsschnittstelle (141, 142, 143; 241, 242, 243) folgendes umfasst:
eine Befehlsschnittstelle (141, 241), die konfiguriert ist, um mindestens eine Befehlsnachricht zwischen dem Verarbeitungsmodul (101, 201) und dem Host-Gerät (121, 221) mit einer ersten Datenrate zu übertragen, wobei die Befehlsnachricht ein Befehlsnachrichtformat umfasst; und
ein Transport Stream Interface (142, 143; 242, 243), das konfiguriert ist, um mindestens eine Datenstromnachricht zwischen dem Verarbeitungsmodul (101, 201) und dem Host-Gerät (121, 221) mit einer zweiten Datenrate zu übertragen, die höher als die erste Datenrate ist, wobei die Datenstromnachricht ein Datenstromformat umfasst, das ein anderes ist als das Befehlsnachrichtformat;
wobei das Verarbeitungsmodul (201) konfiguriert ist, um:
mindestens eine Befehlsnachricht in das Datenstromformat umzuwandeln; und
die Befehlsnachricht von dem Verarbeitungsmodul (201) über das Transport Stream Interface (243) an das Host-Gerät (221) zu senden; und
das Host-Gerät (221) konfiguriert ist, um:
mindestens eine weitere Befehlsnachricht in das Datenstromformat umzuwandeln; und
die weitere Befehlsnachricht von dem Host-Gerät (221) über das Transport Stream Interface (242) an das Verarbeitungsmodul (201) zu senden;
**wobei das System dadurch gekennzeichnet ist, dass:**
das Host-Gerät (221) des Weiteren konfiguriert ist, um:
die so umgewandelte Befehlsnachricht zusammen mit der Transportstromnachricht zu umfassen, um einen ersten verbesserten Datenstrom zu bilden; und
das Verarbeitungsmodul (201) des Weiteren konfiguriert ist, um:
den ersten verbesserten Datenstrom zu filtern, um die weitere Befehlsnachricht von der Datenstromnachricht zu trennen.

2. System nach Anspruch 1, wobei:
das Verarbeitungsmodul (201) des Weiteren konfiguriert ist, um:
die so umgewandelte Befehlsnachricht zusammen mit der Datenstromnachricht zu umfassen, um einen ersten verbesserten Datenstrom zu bilden; und
das Host-Gerät (221) des Weiteren konfiguriert ist, um:
den ersten verbesserten Datenstrom zu filtern, um die weitere Befehlsnachricht von der Datenstromnachricht zu trennen.

3. System nach einem beliebigen der vorherigen Patentansprüche, das des Weiteren konfiguriert ist, um es der Befehlsschnittstelle (241) zu ermöglichen, parallel zum Transport Stream Interface (242, 243) zur Übertragung der Befehlsnachricht zwischen dem Verarbeitungsmodul (201) und dem Host-Gerät (221) verwendet zu werden.

4. System nach einem beliebigen der vorherigen Patentansprüche, wobei die Verbindungsschnittstelle mit einem CI-Plus-Standard, einem DVB-CI-Standard oder einem CI-Standard kompatibel ist.

5. System nach einem beliebigen der vorherigen Patentansprüche, wobei die zweite Datenrate mehr als zehnmal größer als die erste Datenrate ist.

6. Host-Gerät (121, 221), das konfiguriert ist, um in einem System nach Anspruch 2 zu arbeiten, wobei das Host-Gerät (121, 221) ein Befehlsschnittstellenmodul (122, 222) umfasst, zum Empfangen oder Senden mindestens eines Standardbefehls mit einer ersten Datenrate über eine Befehlsschnittstelle (141, 241), und ein verbessertes Transport-Stream-Interface-Modul (123, 223) zum Empfangen oder Senden mindestens eines Datenstroms mit einer Vielzahl von Datenpaketen über ein Transport Stream Interface (142, 143; 242, 243) mit einer zweiten Datenrate, die höher als die erste Datenrate ist, **wobei das Host-Gerät (221) dadurch gekennzeichnet ist, dass** das verbesserte Transport-Stream-Interface-Modul (223) des Weiteren konfiguriert ist, um:
mindestens einen ersten Befehl mit Befehlsformat in mindestens ein erstes Befehlsdatenpaket umzuwandeln, das mit einem Datenstromformat kompatibel ist, das erste Befehlsdatenpaket mit mindestens einem ersten Inhaltdatenpaket zu bündeln, das mit dem Datenstromformat kompatibel ist, um einen ersten Datenstrom mit dem Datenstromformat zu bilden;
den ersten Datenstrom über das Transport Stream Interface (241) zu senden;
einen zweiten Datenstrom über das Transport Stream Interface zu empfangen;
den zweiten Datenstrom in mindestens ein zweites Inhaltsdatenpaket und mindestens ein zweites Datenstrombefehlsdatenpaket zu trennen, die beide mit dem Datenstromformat kompatibel sind; und
das zweite Befehlsdatenpaket in einen zweiten Befehl umzuwandeln, der mit dem Befehlsformat kompatibel ist.

7. Host-Gerät (221) nach Anspruch 6, das des Weiteren einen Befehlsstapel umfasst, um mindestens einen der Befehle zu speichern.

8. Host-Gerät (221) nach einem beliebigen der Ansprüche 6 oder 7, das des Weiteren ein Dateisystem umfasst, um mindestens eine erste Datei auf der Grundlage der ersten Inhaltsdatenpakete zu speichern, oder um mindestens eine zweite Datei zu speichern, von der die zweiten Inhaltdatenpakete abgeleitet werden können.

9. Host-Gerät (221) nach einem beliebigen der Ansprüche 6 bis 8, wobei die zweite Datenrate mehr als zehnmal größer als die erste Datenrate ist.

10. Verarbeitungsmodul (101, 201), das konfiguriert ist, um in einem System nach Anspruch 3 zu arbeiten, wobei das Verarbeitungsmodul (101, 201) ein Befehlsschnittstellenmodul (102, 202) umfasst, zum Empfangen oder Senden mindestens eines Standardbefehls mit einer ersten Datenrate über eine Befehlsschnittstelle (141, 241), und ein Transport-Stream-Interface-Modul (103, 203) zum Empfangen oder Senden mindestens eines Datenstroms mit einer Vielzahl von Datenpaketen über ein Transport Stream Interface (142, 143; 242, 243) mit einer zweiten Datenrate, die höher als die erste Datenrate ist, **wobei das Verarbeitungsmodul (201) dadurch gekennzeichnet ist, dass** das Transport-Stream-Interface-Modul (102, 202) des Weiteren konfiguriert ist, um:
mindestens einen ersten Befehl mit Befehlsformat in mindestens ein erstes Befehlsdatenpaket umzuwandeln, das mit einem Datenstromformat kompatibel ist, das erste Befehlsdatenpaket mit mindestens einem ersten Inhaltsdatenpaket zu bündeln, das mit dem Datenstromformat kompatibel ist, um einen ersten Datenstrom mit dem Datenstromformat zu bilden;
den ersten Datenstrom über das Transport Stream Interface (241) zu senden;
einen zweiten Datenstrom über das Transport Stream Interface zu empfangen;
den zweite Datenstrom in mindestens ein zweites Inhaltsdatenpaket und mindestens ein zweites Datenstrombefehlsdatenpaket zu trennen, die beide mit dem Datenstromformat; kompatibel sind; und
das zweite Befehlsdatenpaket in einen zweiten Befehl umzuwandeln, der mit dem Befehlsformat kompatibel ist.

11. Verarbeitungsmodul (201) nach Anspruch 10, das des Weiteren einen Befehlsstapel umfasst, um mindestens einen der Befehle zu speichern.

12. Verarbeitungsmodul (201) nach einem beliebigen der Ansprüche 10 oder 11, das des Weiteren ein Dateisystem umfasst, um mindestens eine erste Datei auf der Grundlage der ersten Inhaltsdatenpakete zu speichern oder um mindestens eine zweite Datei zu speichern, von der die zweiten Inhaltsdatenpakete abgeleitet werden können.

13. Verarbeitungsmodul (201) nach einem beliebigen der Ansprüche 10 bis 12, wobei die zweite Datenrate mehr als zehnmal größer als die erste Datenrate ist.

14. Verfahren zur Übertragung eines Befehls zwischen einem Host-Gerät (221) nach einem beliebigen der Ansprüche 6 bis 9 und einem Verarbeitungsmodul (201) nach einem beliebigen der Ansprüche 10 bis 13, wobei das Verfahren folgendes umfasst:
Umwandlung eines Befehls in mindestens ein Befehlsdatenpaket, das mit einem Datenstromformat kompatibel ist, wobei der Befehl ein Befehlsformat umfasst, das zur Übertragung über eine Befehlsschnittstelle mit einer ersten Datenrate geeignet ist;
Bündeln des Befehlsdatenpakets mit einem Inhaltsdatenpaket, um einen Datenstrom zu ergeben, der für die Übertragung über ein Transport Stream Interface mit einer zweiten Datenrate geeignet ist, die höher als die erste Datenrate ist;
Übertragung des Datenstroms über das Transport Stream Interface;
Empfang des Datenstroms;
Extrahieren die Befehlsdatenpakete aus dem empfangenen Datenstrom;
Rückwandeln der extrahierten Befehlsdatenpakete, um den Befehl wiederherzustellen;
Ausführung des wiederhergestellten Befehls.

15. Verfahren nach Anspruch 14, wobei die zweite Datenrate mehr als zehnmal größer als die erste Datenrate ist.

## Revendications

1. Système comprenant un module de traitement (101, 201) et un dispositif hôte (121, 221), le module de traitement (101, 201) et le dispositif hôte (121, 221) étant adaptés pour être connectés l'un à l'autre par une interface de communication (141, 142, 143; 241, 242, 243);
l'interface de communication (141, 142, 143; 241, 242, 243) comprenant:
une interface de commande (141, 241) configurée pour transférer au moins un message de commande entre le module de traitement (101, 201) et le dispositif hôte (121, 221) à un premier débit de données, le message de commande ayant un format de message de commande; et
une interface de flux de transport (142, 143; 242, 243) configurée pour transférer au moins un message de flux de transport entre le module de traitement (101, 201) et le dispositif hôte (121, 221) à un deuxième débit de données supérieur au premier débit de données, le message de flux de transport ayant un format de flux de transport différent du format du message de commande;
le module de traitement (201) étant configuré:
pour convertir au moins un message de commande au format de flux de transport; et
pour envoyer le message de commande du module de traitement (201) au dispositif hôte (221) par l'interface de flux de transport (243); et
le dispositif hôte (221) étant configuré:
pour convertir au moins un message de commande ultérieur au format de flux de transport; et
pour envoyer le message de commande ultérieur du dispositif hôte (221) au module de traitement (201) par l'interface de flux de transport (242);
**le système étant caractérisé en ce que:**
le dispositif hôte (221) est configuré en outre:
pour inclure le message de commande ainsi converti avec le message de flux de transport pour former un premier flux de transport amélioré; et
le module de traitement (201) est configuré en outre:
pour filtrer le premier flux de transport amélioré pour séparer le message de commande ultérieur du message de flux de transport.

2. Système selon la revendication 1, où:
le module de traitement (201) est configuré en outre:
pour inclure le message de commande ainsi converti avec le message de flux de transport pour former un premier flux de transport amélioré; et
le dispositif hôte (221) est configuré en outre:
pour filtrer le premier flux de transport amélioré pour séparer le message de commande ultérieur du message de flux de transport.

3. Système selon l'une quelconque des revendications précédentes, configuré en outre pour permettre à l'interface de commande (241) d'être utilisée parallèlement avec l'interface de flux de transport (242, 243) pour transférer le message de commande entre le module de traitement (201) et le dispositif hôte (221).

4. Système selon l'une quelconque des revendications précédentes, où l'interface de communication est conforme à un quelconque parmi un Standard CI Plus, un Standard DVB-CI ou un Standard CI.

5. Système selon l'une quelconque des revendications précédentes, où le deuxième débit de données est plus de dix fois supérieur au premier débit de données.

6. Dispositif hôte (121, 221) configuré pour fonctionner dans un système selon la revendication 2, le dispositif hôte (121, 221) comprenant un module d'interface de commande (122, 222) pour recevoir ou envoyer au moins une commande standard à un premier débit de données sur une interface de commande (141, 241) et un module d'interface de flux de transport amélioré (123, 223) pour recevoir ou envoyer au moins un flux de transport comprenant une pluralité de paquets de données sur une interface de flux de transport (142, 143; 242, 243) à un deuxième débit de données supérieur au premier débit de données, **le dispositif hôte (221) étant caractérisé en ce que** le module d'interface de flux de transport amélioré (223) est configuré en outre pour:
convertir au moins une première commande ayant un format de commande en au moins un premier paquet de données de commande compatible avec un format de flux de transport, multiplexer le premier paquet de données de commande avec au moins un premier paquet de données de contenu compatible avec le format de flux de transport pour former un premier flux de transport ayant le format de flux de transport;
envoyer le premier flux de transport sur l'interface de flux de transport (241),
recevoir un deuxième flux de transport par l'interface de flux de transport;
séparer le deuxième flux de transport en au moins un deuxième paquet de données de contenu et au moins un deuxième paquet de données de commande de flux de données, les deux étant compatibles avec le format de flux de transport; et
convertir le deuxième paquet de données de commande en une deuxième commande compatible avec le format de commande.

7. Dispositif hôte (221) selon la revendication 6, où il comprend en outre une pile de commandes pour stocker au moins une des commandes.

8. Dispositif hôte (221) selon une des revendications 6 ou 7, où il comprend en outre un système de fichiers pour stocker au moins un premier fichier basé sur les premiers paquets de données de contenu ou pour stocker au moins un deuxième fichier d'où les deuxièmes paquets de données de contenu peuvent être tirés.

9. Dispositif hôte (221) selon l'une quelconque des revendications 6 à 8, où le deuxième débit de données est plus de dix fois supérieur au premier débit de données.

10. Module de traitement (101, 201) configuré pour fonctionner dans un système selon la revendication 3, le module de traitement (101, 201) comprenant un module d'interface de commande (102, 202) pour recevoir ou envoyer au moins une commande standard à un premier débit de données sur une interface de commande (141, 241), et un module d'interface de flux de transport (103, 203) pour recevoir ou envoyer au moins un flux de transport comprenant une pluralité de paquets de données sur une interface de flux de transport (142, 143; 242, 243) à un deuxième débit de données supérieur au premier débit de données, l**e module de traitement (201) étant caractérisé en ce que** le module d'interface de flux de transport (102, 202) est configuré en outre pour:
convertir au moins une première commande ayant un format de commande en au moins un premier paquet de données de commande compatible avec un format de flux de transport, multiplexer le premier paquet de données de commande avec au moins un premier paquet de données de contenu compatible avec le format de flux de transport pour former un premier flux de transport ayant le format de flux de transport;
envoyer le premier flux de transport sur l'interface de flux de transport (241),
recevoir un deuxième flux de transport par l'interface de flux de transport;
séparer le deuxième flux de transport en au moins un deuxième paquet de données de contenu et au moins un deuxième paquet de données de commande de flux de données, les deux étant compatibles avec le format de flux de transport; et
convertir le deuxième paquet de données de commande en une deuxième commande compatible avec le format de commande.

11. Module de traitement (201) selon la revendication 10, où il comprend en outre une pile de commandes pour stocker au moins une des commandes.

12. Module de traitement (201) selon une des revendications 10 ou 11, où il comprend en outre un système de fichiers pour stocker au moins un premier fichier basé sur les premiers paquets de données de contenu ou pour stocker au moins un deuxième fichier d'où les deuxièmes paquets de données de contenu peuvent être tirés.

13. Module de traitement (201) selon l'une quelconque des revendications 10 à 12, où le deuxième débit de données est plus de dix fois supérieur au premier débit de données.

14. Méthode pour transférer une commande entre un dispositif hôte (221) selon l'une quelconque des revendications 6 à 9 et un module de traitement (201) selon l'une quelconque des revendications 10 à 13, la méthode comprenant:
conversion d'une commande en au moins un paquet de données de commande compatible avec un format de flux de transport, la commande ayant un format de commande adapté pour le transfert à travers une interface de commande à un premier débit de données;
multiplexage du paquet de données de commande avec un paquet de données de contenu pour donner un flux de transport adapté pour le transfert par une interface de flux de transport à un deuxième débit de données supérieur au premier débit de données;
transfert du flux de transport par l'interface de flux de transport;
réception du flux de transport;
extraction des paquets de données de commande du flux de transport reçu;
reconversion des paquets de données de commande extraits pour récupérer la commande;
exécution de la commande récupérée.

15. Méthode selon la revendication 14, où le deuxième débit de données est plus de dix fois supérieur au premier débit de données.
